# EUROPEAN PATENT SPECIFICATION

(11) **EP 4 391 284 B1**
(45) Date of publication and mention of the grant of the patent: **24.12.2025**
(21) Application number: 22897739.3
(22) Date of filing: 21.11.2022
(51) Int. Cl.: H02J 7/00, H02J 7/34, B25F 5/00, H01M 50/24

(54) **ENERGY SUPPLY APPARATUS AND ELECTRIC TOOL SYSTEM**
ENERGIEVERSORGUNGSVORRICHTUNG UND ELEKTROWERKZEUGSYSTEM
APPAREIL D'ALIMENTATION EN ÉNERGIE ET SYSTÈME D'OUTIL ÉLECTRIQUE

(30) Priority: 25.11.2021 CN 202111411053
(43) Date of publication of application: 26.06.2024
(73) Proprietor: Nanjing Chervon Industry Co., Ltd., Nanjing, Jiangsu 211106 (CN)
(72) Inventor: YANG, Dezhong, Nanjing, Jiangsu 211106 (CN)
(74) Representative: Sun, Yiming
(86) International application number: PCT/CN2022/133095
(87) International publication number: WO 2023/093656

(56) References cited:
- WO-A1-2019/179349
- WO-A1-2020/168416
- CN-A- 105 162 225
- CN-A- 109 861 368
- CN-A- 112 259 866
- CN-A- 112 927 951
- CN-U- 206 259 722
- CN-U- 206 259 722
- CN-U- 208 400 721
- LAM ET AL: "VRLA Ultrabattery for high-rate partial-state-of-charge operation", JOURNAL OF POWER SOURCES, ELSEVIER, AMSTERDAM, NL, vol. 174, no. 1, 7 November 2007 (2007-11-07), pages 16 - 29, XP022335863, ISSN: 0378-7753, DOI: 10.1016/J.JPOWSOUR.2007.05.047

## Description

### TECHNICAL FIELD

The present application relates to the field of power tools, for example, an energy supply device and a power tool system using the energy supply device.

### BACKGROUND

Power tools powered by battery packs are widely used for their convenience. A battery pack adapted to a power tool usually requires to be charged for several hours. Therefore, during use of the power tool, if the power of the battery pack is used up, a user needs to detach the battery pack from the power tool, charge the battery pack for hours, and re-mount the battery pack to the power tool for continued use, causing inconvenience to the user. Additionally, lithium battery packs, which are common on the market, have too fast a voltage drop at a low temperature below 0 °C, resulting in poor user experience.

### SUMMARY

For example, the document CN206259722U discloses an example of an electric device capable of quick charge, including electric device body and power package. The electric device body has the portion of accepting the power package.

In order to overcome the drawbacks of this prior art arrangement, in particular the possibility to charge the energy power supply device while it supplies the power tool and its limited operating temperature range, a device according to the independent claim 1 is provided.

### BRIEF DESCRIPTION OF DRAWINGS

FIG. 1 is a perspective view of an energy supply device and a power tool according to an example of the present application;
FIG. 2 is a perspective view of the energy supply device of FIG. 1;
FIG. 3 is a perspective view of the energy supply device of FIG. 1 with a housing removed;
FIG. 4 is a schematic view of the charging of an energy supply device according to an example of the present application;
FIG. 5 is a circuit diagram of the energy supply device of FIG. 4;
FIG. 6 is a schematic diagram of a power tool system according to an example of the present application;
FIG. 7 is a system block diagram of a power tool according to an example of the present application;
FIG. 8 is a flowchart of a control method of an electric motor according to an example of the present application;
FIG. 9 is a graph of discharge voltages of a lithium-carbon capacitor and a lithium battery;
FIG. 10 is a graph of the comparison of the case where the control method of the electric motor in FIG. 5 is used and the case where the control method of the electric motor in FIG. 5 is not used;
FIG. 11 is a top view of a third charging apparatus according to an example of the present application;
FIG. 12A is a perspective view of the third charging apparatus of FIG. 11;
FIG. 12B is a perspective view of the third charging apparatus of FIG. 11 from another perspective; and
FIG. 13 is a block diagram of a power tool according to an example of the present application.

### DETAILED DESCRIPTION

The present disclosure is described below in conjunction with the drawings and examples.

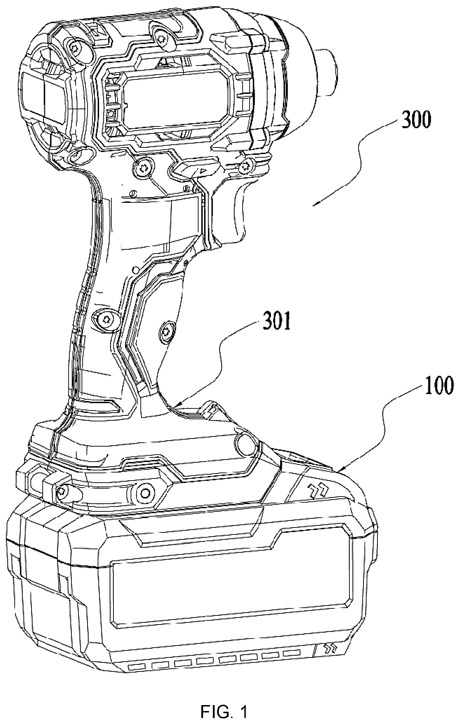

As shown in FIGS. 1 to 3, the present disclosure discloses an energy supply device, which is referred to as a first energy supply device 100. The first energy supply device 100 mainly includes a housing 110; a cell module 120 accommodated in the housing 110 and including multiple single cells 121; a charging terminal assembly 130 configured to be connected to connection terminals of a first-type electronic device; and a discharge terminal assembly 140 configured to be connected to connection terminals of a second-type electronic device. The first energy supply device 100 is detachably connected to a power tool 300 and provides electrical energy for the power tool, such as an electric screwdriver, an electric drill, a mower, and a snow thrower.

In an example, in the shown structure, the cell module 120 may be a 25.2 V 2P cell module 120 and includes 12 single cells 121 each with a nominal voltage of about 4.2 V, where six single cells 121 are one series cell group, and two series cell groups are connected in parallel to form the cell module 120. In this construction, the first energy supply device 100 has a weight of about 1.6 kg. In other constructions, the cell module 120 may have other voltages such as 12.6 V, 21 V, and 42 V to supply power to the power tool and be charged by a charging apparatus. It is to be understood that in other constructions, the first energy supply device 100 may have different nominal cell voltages or may be connected with another configuration, which adopts any connection in series, connection in parallel, or connection in series and parallel.

A single cell 121 may be a supercapacitor, which is also referred to as an electrochemical capacitor. Specifically, the single cell 121 is an asymmetric supercapacitor. An electrochemical capacitor based on the capacitor principle of bipolar plates is generally designed to be symmetric, two identical materials with matched masses are used for a positive electrode and a negative electrode, such as activated carbon electrodes, and the positive electrode and the negative electrode are generally not distinguished for the symmetric capacitor. Although the symmetric capacitor has a good power density and cycle life, the energy density of the symmetric capacitor is much lower than that of a lithium-ion battery, a nickel-metal hydride battery, or the like. Two electrodes of an asymmetric capacitor are made of different materials, such as a carbon material/transition metal oxide system electrode material, a carbon material/conductive polymer system electrode material, or two activated carbon electrodes with different electrochemical performance, thereby improving the energy density of the electrochemical capacitor to 80 to 120 Wh/kg. Thus, the asymmetric capacitor can be used as an energy supply unit of the power tool. In an example, the single cell 121 may be a lithium-carbon capacitor (LCC). The lithium-carbon capacitor is an asymmetric supercapacitor that stores energy through shallow insertion and shallow extraction of lithium ions, is a new type of energy storage device, and has good performance such as high safety of no fire and no explosion, a high cycle life of hundreds of thousands of cycles, high-rate charge and discharge, and low-temperature resistance. Therefore, the energy supply device 100 using the lithium-carbon capacitor as the single cell 121 has advantages in terms of safety, charging time, service life, and the like. Compared with a conventional lithium battery, the lithium-carbon capacitor has a low internal resistance. Therefore, the internal resistance of the single cell 121 is greater than or equal to 0.1 mΩ and less than or equal to 4 mΩ. Optionally, the internal resistance of the single cell 121 is greater than or equal to 0.3 mΩ and less than or equal to 3 mΩ. Optionally, the internal resistance of the single cell 121 is greater than or equal to 0.5 mΩ and less than or equal to 2 mΩ. Therefore, the first energy supply device 100 generates a small amount of heat during use and can discharge at a large current. Optionally, the first energy supply device 100 can withstand continuous discharge at 6C to a maximum of 15C and transient discharge at up to 60C. Optionally, the first energy supply device 100 can withstand continuous discharge at 8C to a maximum of 20C and transient discharge at up to 80C. Optionally, the first energy supply device 100 can withstand continuous discharge at 10C to a maximum of 25C and transient discharge at up to 100C. Optionally, the first energy supply device 100 can withstand continuous discharge at 20C to a maximum of 50C and transient discharge at up to 200C. Optionally, the first energy supply device 100 can withstand continuous discharge at 40C to a maximum of 100C and transient discharge at up to 400C. For some power tools, transient discharge at a large current can cause the output of large torque to overcome resistance, thereby improving working efficiency and improving user experience. For example, when the electric drill works on a hard surface or when the snow thrower works on a road surface with deep snow, the power tool using the first energy supply device 100 can have strong power, greatly improving the working efficiency. Additionally, the first energy supply device 100 can work at a low temperature, providing a user with convenience and improving the user experience especially for power tools working outdoors, such as the snow thrower. Optionally, the working temperature of the first energy supply device 100 is higher than or equal to minus 35 degrees Celsius and lower than or equal to 65 degrees Celsius. Optionally, the working temperature of the first energy supply device 100 is higher than or equal to minus 40 degrees Celsius and lower than or equal to 70 degrees Celsius.

Depending on the volume, the capacity of a single lithium-carbon capacitor may range from 7 F to 5500 F. In this example, the cell module 120 composed of 12 single cells 121 each with a capacity of about 750 F may provide power of 9000 F, which is equivalent to a capacity of about 4 Ah. The lithium-carbon capacitor has various shapes. In this example, each single cell 121 may be cylindrical. Additionally, in the first energy supply device 100, the length of each single cell 121 may be more than twice and almost three times the diameter of the single cell 121. For example, each single cell 121 may have a diameter of about 26 mm and a length of about 60 mm. In some constructions, each single cell 121 may have a length of about 65 mm. In some constructions, each single cell 121 may have a length of about 70 mm. It is to be noted that the first energy supply device 100 of the present disclosure may adopt the lithium-carbon capacitor in another shape, for example, a sheet-like pouch lithium-carbon capacitor.

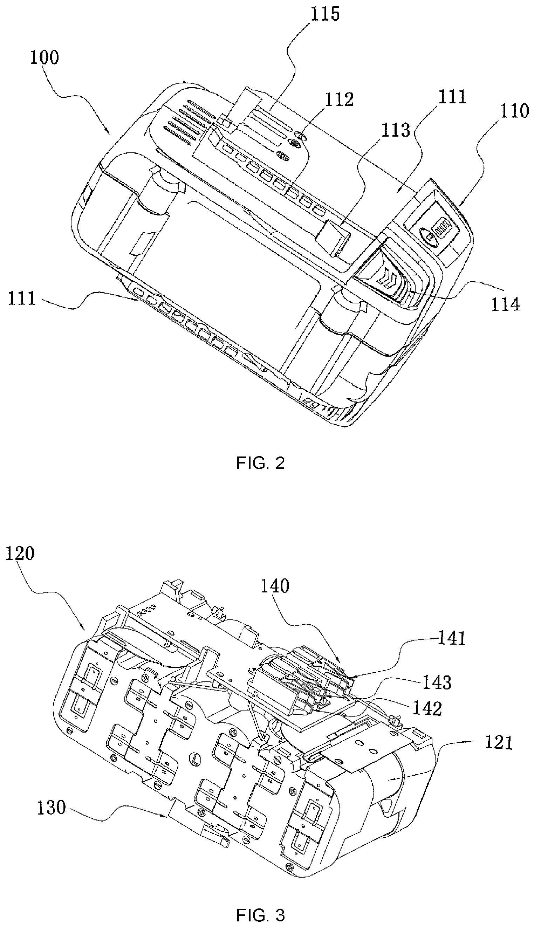

As shown in FIG. 3, in this example, six cylindrical single cells 121 connected in series in each group may be arranged in parallel, that is to say, the axes of the cylindrical single cells 121 are parallel to each other. Specifically, the axes of six single cells 121 may be arranged in parallel on the same plane, and the axes of the other six single cells 121 may be arranged in parallel on another plane parallel to the preceding plane. That is to say, the 12 single cells 121 are arranged in parallel in two layers, so as to achieve a relatively small and flat appearance.

As shown in FIG. 2, the housing 110 of the first energy supply device 100 includes a support portion 111 configured to be connected to the charging apparatus or the power tool. In an example, the support portion is a protrusion formed with sliding slots 112 and locking mechanism 113 on two sides. When the energy supply device is coupled to the charging apparatus or the power tool, a mating portion of the charging apparatus or the power tool is pushed into ends of the sliding slots along an extension direction of the sliding slots until the mating portion is engaged with the locking mechanisms. In an example, the housing of the energy supply device includes two support portions 111 which are configured to be coupled to the charging apparatus and the power tool, respectively. As shown in FIG. 2, the two support portions 111 are located on a top surface and a bottom surface of the energy supply device respectively so that the first energy supply device 100 can be simultaneously coupled to the charging apparatus and the power tool, thereby omitting the step in which the user needs to detach the energy supply device for charging and achieving more convenient operations. Eject buttons 114 at the top of the first energy supply device 100 are pressed so that the locking mechanisms can be unlocked to eject the first energy supply device 100. Thus, the user conveniently separates the first energy supply device 100 from the charging apparatus or the power tool. It is to be noted that the support portions 111, the locking mechanisms 113, and the eject buttons 114 shown in FIG. 2 are only an example of a structure, and the specific shape of the housing of the energy supply device and the specific structures of the support portions, the locking mechanisms, and the eject buttons formed on the housing are not limited in the present disclosure.

In an example, the first energy supply device 100 includes the charging terminal assembly 130 configured to be electrically connected to the connection terminals of the first-type electronic device and the discharge terminal assembly 140 configured to be electrically connected to the connection terminals of the second-type electronic device. The first-type electronic device is an electronic device that charges the first energy supply device 100 through the charging terminal assembly 130, for example, the charging apparatus adapted to the first energy supply device 100. Specifically, the charging apparatus may be a dedicated charging apparatus specially used for charging the first energy supply device 100 or may be a universal charging apparatus capable of charging both the first energy supply device 100 and a common energy supply device. Since the lithium-carbon capacitor can withstand charge at a large current, the first energy supply device 100 has a high charge rate and a charging time calculated in minutes. In an example, the charge rate of the first energy supply device 100 is 6C. In an example, the charge rate of the first energy supply device 100 is 8C. In an example, the charge rate of the first energy supply device 100 is 10C. In an example, the charge rate of the first energy supply device 100 is 20C. In an example, the charge rate of the first energy supply device 100 is 30C. Compared with a common lithium-ion energy supply device, the first energy supply device 100 has a large charge current. For example, for the first energy supply device 100 with a capacity of about 4 Ah in this example, the charge rate is 6C, that is, the first energy supply device is charged at a large current of 24 A and can be fully charged in 10 minutes; the charge rate is 8C, that is, the first energy supply device is charged at a large current of 32 A and can be fully charged in 7.5 minutes; the charge rate is 10C, that is, the first energy supply device is charged at a large current of 40 A and can be fully charged in 6 minutes; the charge rate is 20C, that is, the first energy supply device is charged at a large current of 80 A and can be fully charged in 3 minutes; or the charge rate is 30C, that is, the first energy supply device is charged at a large current of 120 A and can be fully charged in 2 minutes. For the first energy supply device 100 with a weight of about 1.6 kg, it can be deduced according to the preceding data that in an example, the ratio of the charge current to the weight of the first energy supply device 100 is greater than or equal to 25 A/kg and less than or equal to 50 A/kg; in an example, the ratio of the charge current to the weight of the first energy supply device 100 is greater than or equal to 20 A/kg and less than or equal to 75 A/kg; in an example, the ratio of the charge current to the weight of the first energy supply device 100 is greater than or equal to 15 A/kg and less than or equal to 150 A/kg; in an example, the ratio of the charge current to the weight of the first energy supply device 100 is greater than or equal to 15 A/kg and less than or equal to 200 A/kg.

The second-type electronic device is the power tool that acquires the electrical energy through the discharge terminal assembly 140. The first energy supply device 100 may support the power tool in large-current discharge and outputting large power and large torque. With the first energy supply device 100 with a capacity of about 4 Ah in this example as an example, the first energy supply device 100 can withstand a continuous discharge current of 24 A, a maximum discharge current of about 60 A, and a transient discharge current of up to 240 A. Optionally, the first battery pack energy supply device 100 can withstand a continuous discharge current of 32 A, a maximum discharge current of about 80 A, and a transient discharge current of up to 320 A. Optionally, the first energy supply device 100 can withstand a continuous discharge current of 40 A, a maximum discharge current of about 100 A, and a transient discharge current of up to 400 A. Optionally, the first energy supply device 100 can withstand a continuous discharge current of 80 A, a maximum discharge current of about 200 A, and a transient discharge current of up to 800 A. Optionally, the first battery pack energy supply device 100 can withstand a continuous discharge current of 160 A, a maximum discharge current of about 400 A, and a transient discharge current of up to 1600 A.

When the power tool is normally used, the first energy supply device intermittently discharges at a large current for a short time through the discharge terminal assembly 140. During normal charging, the first energy supply device is continuously charged at a large current for a long time through the charging terminal assembly 130. Therefore, in an example, the first energy supply device 100 adopts the charging terminal assembly 130 and the discharge terminal assembly 140 which are different from each other. The discharge terminal assembly 140 includes a discharge positive terminal 141, a discharge negative terminal 142, and a discharge information terminal 143. The discharge terminal assembly 140 is disposed in the support portion 111, and a positive terminal, a negative terminal, and an information terminal of the power tool are in contact with the discharge positive terminal 141, the discharge negative terminal 142, and the discharge information terminal 143 through hole slots 115 of the support portion 111 to implement an electrical connection. Accordingly, the charging terminal assembly 130 includes a charging positive terminal, a charging negative terminal, and a charging information terminal. The charging terminal assembly 130 is disposed in the other opposite support portion 111, and a positive terminal, a negative terminal, and an information terminal of the charging apparatus are in contact with the charging positive terminal, the charging negative terminal, and the charging information terminal through hole slots of the other support portion to implement an electrical connection. The charging positive terminal and the charging negative terminal can withstand a continuous large current to ensure fast and safe charging. The design of the charging terminal assembly and the discharge terminal assembly which are independent of each other, in one aspect, can ensure the reliability and safety of large-current charging and, in the other aspect, can omit the step in which the user needs to detach the first energy supply device 100 for charging, achieving more convenient operations. That is to say, during charging, the user has no need to detach the first energy supply device 100 from the power tool and can directly connect the first energy supply device 100 connected to the power tool to the charging apparatus for charging. In particular, the first energy supply device 100 of the present disclosure has a very short charging time and can be fully charged in a few minutes, thereby omitting the step of detaching the first energy supply device 100 and implementing a more convenient and faster charging process. In this example, the charging terminal assembly 130 and the discharge terminal assembly 140 are disposed on two different surfaces of the first energy supply device 100, for example, the top surface and the bottom surface which are opposite, so that the power tool and the charging apparatus simultaneously connected to the first energy supply device 100 are staggered in space, thereby avoiding interference.

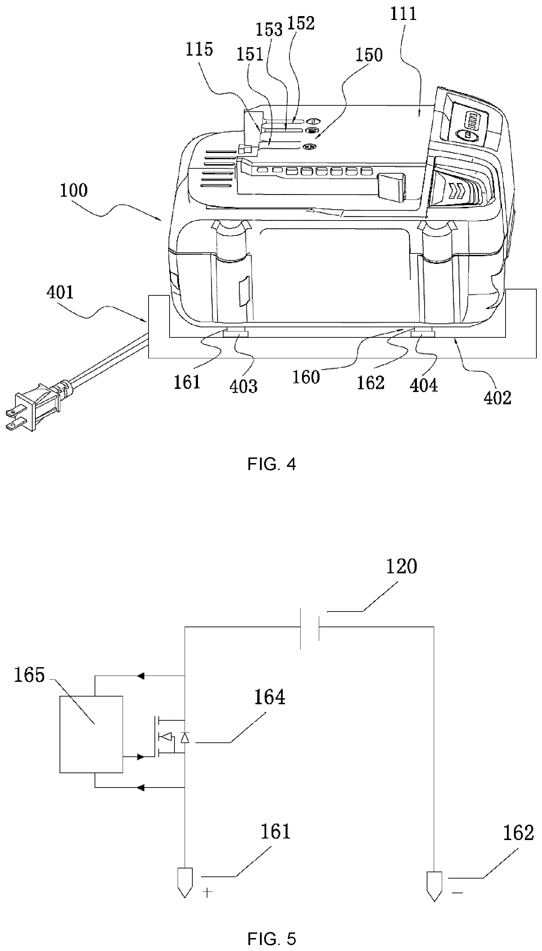

In another example, a first energy supply device 100 has two charging modes. In a first charging mode, the first energy supply device 100 is connected to a first charging apparatus and charged at a first charge rate; in a second charging mode, the first energy supply device 100 is connected to a second charging apparatus and charged at a second charge rate, where the second charge rate is greater than the first charge rate. As shown in FIG. 4, specifically, the first energy supply device 100 is the same as the preceding first energy supply device 100 in other aspects than terminal assemblies. The first energy supply device 100 in this example has a first terminal assembly 150 and a second terminal assembly 160.

The first terminal assembly 150 is similar to a terminal assembly of a common lithium battery pack and may be used for charging the first energy supply device 100 and discharging the first energy supply device 100. Specifically, the first terminal assembly 150 of the first energy supply device 100 may include a positive terminal 151, a negative terminal 152, and an information terminal 153. The first terminal assembly 150 is disposed in the support portion 111. When the first energy supply device 100 is connected to the power tool, the positive terminal, the negative terminal, and the information terminal of the power tool are in contact with the positive terminal 151, the negative terminal 152, and the information terminal 153 through the hole slots 115 of the support portion 111 to implement an electrical connection. When the first energy supply device 100 is connected to a first-type charging apparatus, a positive terminal, a negative terminal, and an information terminal of the first-type charging apparatus are in contact with the positive terminal 151, the negative terminal 152, and the information terminal 153 through the hole slots 115 of the support portion 111 to implement an electrical connection. Optionally, the first charge rate at which the first energy supply device 100 is charged through the first terminal assembly 150 is less than or equal to 5C. Optionally, the first charge rate at which the first energy supply device 100 is charged through the first terminal assembly 150 is less than or equal to 4C. Optionally, the first charge rate at which the first energy supply device 100 is charged through the first terminal assembly 150 is less than or equal to 3C.

The second terminal assembly 160 may be contact charging terminals with a relatively large diameter, which are exposed on a surface of the first energy supply device 100 and support large-current charging. Specifically, the second terminal assembly 160 may include a positive charging terminal 161 and a negative charging terminal 162. The second terminal assembly 160 may include a separate information terminal (not shown), or a communication signal is superimposed on the positive terminal for transmission. In an example, the second terminal assembly 160 and the first terminal assembly 150 are disposed on two different surfaces of the first energy supply device 100, for example, a bottom surface and a top surface which are opposite, so that the power tool and the charging apparatus simultaneously connected to the first energy supply device 100 are staggered in space, thereby avoiding interference. Moreover, since the second terminal assembly 160 is exposed on the surface of the first energy supply device 100, the first energy supply device 100 to be charged only needs to be placed on a connection portion 402 of a second-type charging apparatus 401 so that the positive charging terminal 161 and the negative charging terminal 162 are in contact with a positive terminal 403 and a negative terminal 404 of the second-type charging apparatus 401 respectively, and the first energy supply device 100 does not need to be detached from the power tool, thereby simplifying operation steps for charging and providing the user with convenience of charging in a gap during use of the power tool. Optionally, the second charge rate at which the first energy supply device 100 is charged through the second terminal assembly 160 is greater than or equal to 6C. Optionally, the second charge rate at which the first energy supply device 100 is charged through the second terminal assembly 160 is greater than or equal to 8C. Optionally, the second charge rate at which the first energy supply device 100 is charged through the second terminal assembly 160 is greater than or equal to 10C. In an example, the second charge rate at which the first energy supply device 100 is charged through the second terminal assembly 160 is greater than or equal to twice the first charge rate at which the first energy supply device 100 is charged through the first terminal assembly 150.

Since the second terminal assembly 160 is exposed to the outside, a short circuit between the positive charging terminal 161 and the negative charging terminal 162 of the second terminal assembly 160 needs to be prevented. Generally, the setting of a diode can limit a flow direction of a current and prevent the current from flowing from a positive electrode of the cell module 120 to the positive charging terminal 161, thereby avoiding the short circuit. However, during normal charging, a large amount of heat is generated when the current flows through the diode, resulting in low energy efficiency during charging. As shown in FIG. 5, in an example, a controller 165 and a semiconductor element 164 such as a metal-oxide-semiconductor field-effect transistor (MOSFET) are used to control the charging of the first energy supply device 100. The controller 165 is connected to a control terminal of the semiconductor element 164 and controls the semiconductor element 164 through the control terminal. The semiconductor element 164 is connected between the positive charging terminal 161 and the positive electrode of the cell module 120 through two switching terminals. In a normal state, the two switching terminals of the semiconductor element 164 are unidirectionally on from the positive charging terminal 161 to the positive electrode of the cell module 120 through a parasitic diode, so as to prevent the current from flowing from the cell module 120 to the positive charging terminal 161. In an example, the controller 165 separately detects a voltage of the positive electrode of the cell module 120 and a voltage of the positive charging terminal 161; when the voltage of the positive charging terminal 161 is greater than the voltage of the positive electrode of the cell module 120, the controller 165 controls the semiconductor element 164 through the control terminal to make the semiconductor element bidirectionally on so that a charge current from the second-type charging apparatus 401 flows from the positive charging terminal 161 to the positive electrode of the cell module 120 to charge the first energy supply device 100.

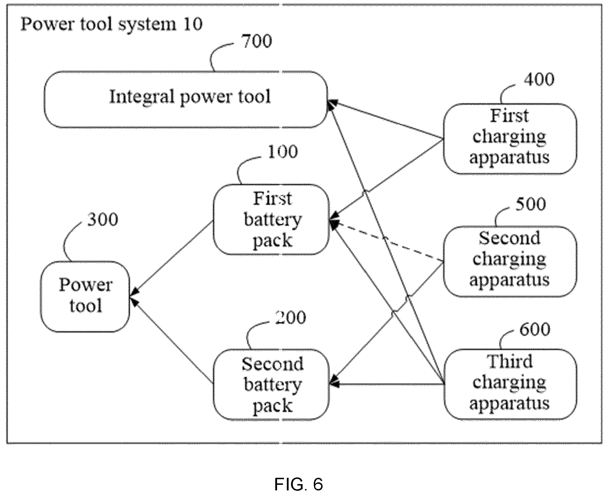

As shown in FIG. 6, the present disclosure further discloses a power tool system 10 including a power tool 300 such as an electric drill. It is to be understood that the power tool 300 may be another torque output power tool such as an electric screwdriver or an electric hammer; the power tool 300 may be a grinding power tool such as an angle grinder; the power tool 300 may be a sawing power tool such as a jigsaw, a reciprocating saw, and an electric circular saw; or the power tool 300 may be a walking power tool such as a mower or a snow thrower. The power tool 300 has a housing 301 detachably connected to an energy supply device, an electric motor 310 configured to convert electrical energy into mechanical energy to implement a function of the power tool, and a controller 320 configured to control at least the rotation of the electric motor. Different power tools may adopt different housings, electric motors, controllers, and the like. It is to be understood that power tools with different shapes, structures, and functions each have a mating portion connected to a support portion of the energy supply device in a mating manner and a terminal assembly electrically connected to a terminal assembly of the energy supply device. That is to say, in the power tool system 10, different power tools have the same power interface. The terminal assembly includes a positive terminal, a negative terminal, and an information terminal, which are configured to be connected to a positive terminal, a negative terminal, and an information terminal of the energy supply device, respectively.

The power tool system 10 further includes a first energy supply device 100 and a second energy supply device 200. A difference between the first energy supply device 100 and the second energy supply device 200 is mainly different chemical principles. For example, the first energy supply device 100 uses the preceding lithium-carbon capacitor as a charge and discharge unit, and the second energy supply device 200 uses a common lithium battery as a charge and discharge unit. Specifically, the second energy supply device 200 may be a lithium battery pack. The first energy supply device 100 is not limited to a single model. That is to say, the first energy supply device 100 may include multiple first energy supply devices 100 of different models. For example, the first energy supply device 100 may include an energy supply device with a nominal voltage of 21 V, an energy supply device with a nominal voltage of 42 V, or an energy supply device with another nominal voltage. The first energy supply device 100 may be a 1P energy supply device or a 2P or 3P energy supply device. The charge rate of the first energy supply device 100 may be 10C, 20C, or 30C. That is to say, in the power tool system 10, energy supply devices with lithium-carbon capacitors as cell modules are collectively referred to as the first energy supply device 100. Similarly, the second energy supply device 200 is also not limited to a single model. That is to say, the second energy supply device 200 may include multiple second energy supply devices 200 of different models. For example, the second energy supply device 200 may include an energy supply device with a nominal voltage of 21 V, an energy supply device with a nominal voltage of 42 V, or an energy supply device with another nominal voltage. The second energy supply device 200 may be a 1P energy supply device or a 2P or 3P energy supply device. That is to say, in the power tool system 10, energy supply devices based on lithium batteries are collectively referred to as the second energy supply device 200. In this manner, a user may flexibly select, according to requirements of the user, the first energy supply device 100 or the second energy supply device 200 of a different model.

It is to be understood that the first energy supply devices 100 of different models have the same charging terminal assembly and the same discharge terminal assembly. That is to say, the first energy supply devices 100 of different models have the same discharge interface. Since different power tools 300 have the same power interface, all the first energy supply devices 100 may be configured to supply power to the power tools 300 in the power tool system 10. Similarly, the second energy supply devices 200 of different models have the same terminal assembly. Different from the first energy supply device 100, the charging terminal assembly and the discharge terminal assembly are not distinguished for the second energy supply device 200. That is to say, the terminal assembly of the second energy supply device 200 may be used for charging the second energy supply device 200 and discharging the second energy supply device 200. Specifically, the terminal assembly of the second energy supply device 200 may include a positive terminal, a negative terminal, and an information terminal. Therefore, the second energy supply devices 200 of different models have the same discharge interface, and all the second energy supply devices 200 may be configured to supply power to the power tools 300 in the power tool system 10. It is to be noted that the discharge terminal assembly of the first energy supply device 100 is similar to the terminal assembly of the second energy supply device 200 so that the terminal assembly of the power tool 300 can be compatible with both the discharge terminal assembly of the first energy supply device 100 and the terminal assembly of the second energy supply device 200. That is to say, the terminal assembly of the power tool 300 may be electrically connected to both the discharge terminal assembly of the first energy supply device 100 and the terminal assembly of the second energy supply device 200, thereby implementing the switching between the first energy supply device 100 and the second energy supply device 200 and providing the user with more diverse options.

When the power tool 300 is connected to the first energy supply device 100, the positive terminal, the negative terminal, and the information terminal in the terminal assembly of the power tool 300 are configured to be connected to a discharge positive terminal, a discharge negative terminal, and a discharge information terminal in the discharge terminal assembly of the first energy supply device 100, respectively. When the power tool 300 is connected to the second energy supply device 200, the positive terminal, the negative terminal, and the information terminal in the terminal assembly of the power tool 300 are configured to be connected to the positive terminal, the negative terminal, and the information terminal in the terminal assembly of the second energy supply device 200, respectively. The controller 320 of the power tool 300 may determine, according to a signal received through the information terminal, whether the first energy supply device 100 or the second energy supply device 200 is connected to the power tool 300. For example, a circuit of the first energy supply device 100 further includes a first identification resistor (not shown), and the controller 320 identifies the first energy supply device 100 through the first identification resistor. Optionally, a specific model of the first energy supply device 100 is identified. When determining that the power tool 300 is electrically connected to the first energy supply device 100 at present, the controller 320 of the power tool 300 controls the electric motor 310 by a first control method, and when determining that the power tool 300 is electrically connected to the second energy supply device 200 at present, the controller 320 of the power tool 300 controls the electric motor 310 by a second control method, where the first control method is different from the second control method.

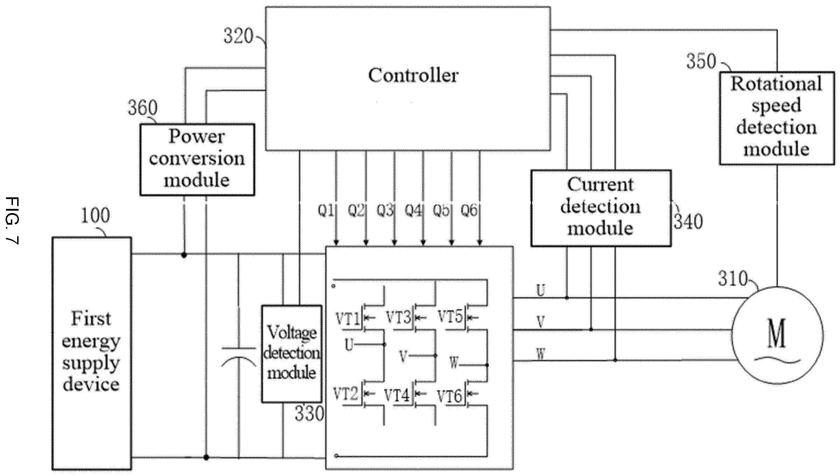

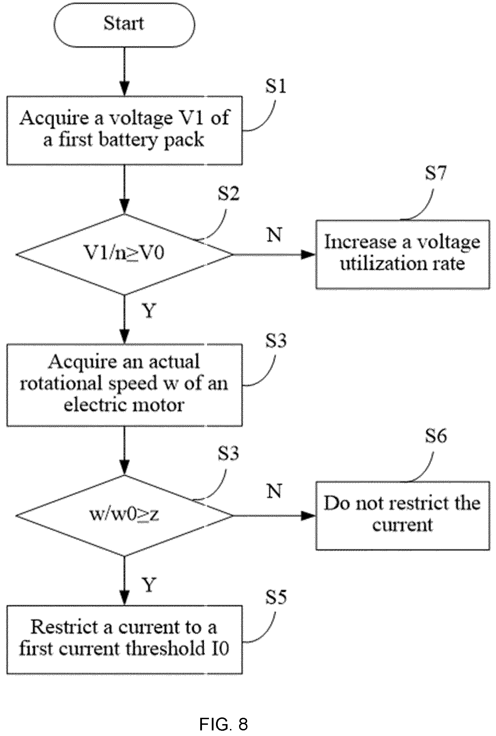

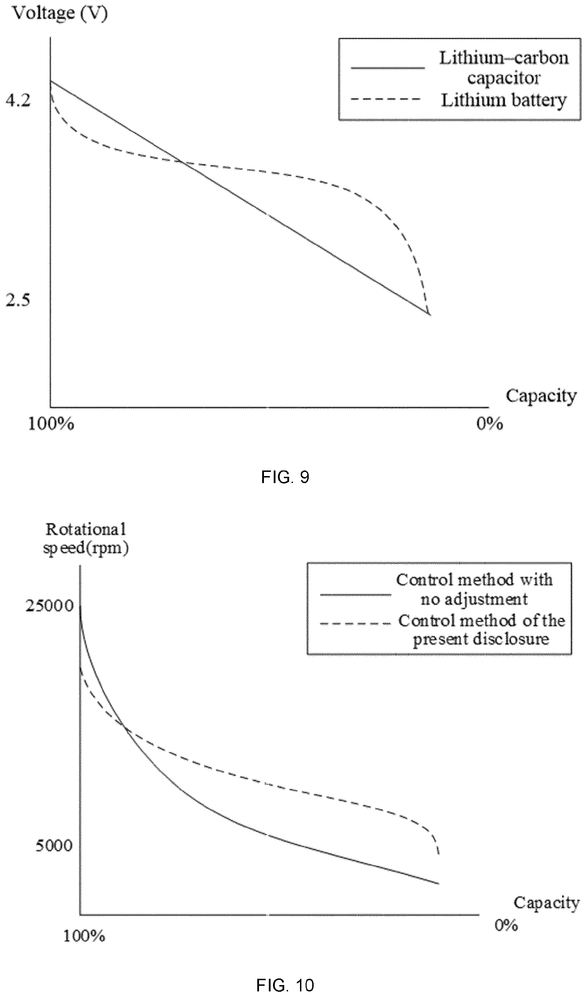

Referring to the discharge curves of the lithium-carbon capacitor and the lithium battery shown in FIG. 9, a relationship between voltage and capacity of the lithium-carbon capacitor is shown by a solid line, and a relationship between voltage and capacity of the lithium battery is shown by a dashed line. It is to be understood that, unlike a relatively stable voltage platform of the lithium battery, the voltage value of the lithium-carbon capacitor decreases with a decrease in capacity. Thus, when the first energy supply device 100 is used for power supply, the power tool 300 has poor experience: strong power at the beginning and gradually reduced power without staying power during use. Referring to the system block diagram of FIG. 7 and the flowchart of FIG. 8, to alleviate this problem and improve user experience, the controller 320 adopts the control method below.

In S1, a voltage V1 of the first energy supply device 100 is acquired.

The power tool 300 includes a voltage detection module 330, and the voltage detection module 330 detects the voltage of the first energy supply device 100 and sends the voltage to the controller 320.

In S2, it is determined whether an average voltage V1/n of a single cell 121 is greater than or equal to a first voltage threshold V0.

n denotes the number of single cells 121 connected in series in the first energy supply device 100, and V1/n denotes the average voltage of the single cell 121 in the first energy supply device 100. V0 is the first voltage threshold. In this example, V0 is equal to 3.7 V, and V0 may be other values. The controller 320 calculates and determines whether the average voltage V1/n of the single cell 121 is greater than or equal to the first voltage threshold V0. When V1/n is greater than or equal to V0, S3 is performed. Otherwise, S7 is performed.

In S3, an actual rotational speed w of the electric motor 310 is acquired.

The controller 320 detects the actual rotational speed w of the electric motor 310 through a rotational speed detection module 350. A method for acquiring the actual rotational speed w of the electric motor 310 is not described in detail here. Specifically, the rotational speed of the electric motor 310 may be detected in a manner such as a Hall sensor, a back electromotive force method, and the measurement of winding currents of the electric motor.

In S4, it is determined whether the ratio w/w0 of the actual rotational speed w of the electric motor to an idle rotational speed w0 of the electric motor is greater than or equal to a locked-rotor threshold z.

The controller 320 determines, according to the ratio of the actual rotational speed w to the idle rotational speed w0 of the electric motor 310, whether the electric motor 310 has a locked rotor. The threshold z for determining the locked rotor may be different values according to different power tools and electric motors, such as 1/4, 1/5, and 1/6. When w/w0 is greater than or equal to z, S5 is performed. Otherwise, S6 is performed.

In S5, a current is restricted to a first current threshold I0.

According to an actual current fed back by a current detection module 340 and the first current threshold I0, the current through the electric motor 310 is restricted to being less than or equal to the first current threshold I0, so as to slow down a voltage drop speed of the first energy supply device 100.

In S6, the current is not restricted, and large torque is outputted.

Since the actual rotational speed w of the electric motor 310 is too low, it may be considered that the electric motor 310 is in or nearly in a locked-rotor state. In this case, the current is not restricted, and the large torque is outputted to overcome the locked rotor.

In S7, a voltage utilization rate is increased.

In this case, the voltage of the first energy supply device 100 is relatively low, and the voltage utilization rate needs to be increased by a modulation method of the electric motor, so as to optimize the rotational speed and load capacity of the electric motor and improve the user experience. Specifically, different control methods are used according to different electric motors. For a brushless direct current (BLDC) electric motor, manners of extending a conduction band and adding a lead angle may be used, for example, a conduction band of 120° is extended to a conduction band of 150° or 180°, and a lead angle of 15° or 30° is added. For a permanent-magnet synchronous motor (PMSM), over-modulation and field weakening methods may be used to increase the torque and current. Finally, the controller 320 controls, according to a calculation result in the preceding control method, switches in a driver circuit of the electric motor to be turned on or off.

In the preceding control manner of the electric motor, the voltage of the first energy supply device 100 can decrease more slowly, and when the voltage of the first energy supply device 100 is insufficient, an effect of the insufficient voltage on the rotational speed and load capacity of the power tool 300 can be reduced, thereby improving the user experience. As shown in FIG. 10, a solid line represents a relationship between the rotational speed of the electric motor and the remaining capacity of the energy supply device in a common control method of the electric motor where no adjustment is made for the first energy supply device 100, and a dashed line represents a relationship between the rotational speed of the electric motor and the remaining capacity of the energy supply device in the preceding control method of the electric motor. It can be seen that when the control manner is not used, although the electric motor has a higher rotational speed when the first energy supply device 100 has sufficient power, the rotational speed of the electric motor decreases significantly as the power decreases; when the control manner is used, although the electric motor has a slightly lower rotational speed when the first energy supply device 100 has sufficient power, the rotational speed of the electric motor decreases at a smaller slope as the power decreases, that is, the rotational speed decreases more gently, and the voltage utilization rate is increased when the voltage is insufficient, thereby increasing, to a certain degree, the rotational speed when the voltage is insufficient. It is to be noted that for different power tools 300 and different electric motors 310, specific thresholds and/or parameters in the preceding control method may be different.

The power tool system 10 further includes a first charging apparatus 400 and a second charging apparatus 500, which are configured to charge the first energy supply device 100 and the second energy supply device 200, respectively. As described above, the first energy supply devices 100 of different models have the same charging terminal assembly 130 and the same discharge terminal assembly 140. Therefore, the first energy supply devices of different models have the same charging interface and can be charged by the same charging apparatus. The first charging apparatus 400 is a large-current charging apparatus and charges the first energy supply device 100 when connected to the charging terminal assembly 130 of the first energy supply device 100. As described above, the second energy supply devices 200 of different models have the same terminal assembly. Therefore, the second energy supply devices 200 of different models have the same charging interface and can be charged by the same charging apparatus. The second charging apparatus 500 may be a common apparatus for charging the lithium battery pack, such as a charging base or a charging pile. A terminal assembly of the first charging apparatus 400 is matched with the charging terminal assembly 130 of the first energy supply device 100, and a terminal assembly of the second charging apparatus 500 is matched with the terminal assembly of the second energy supply device 200. It is to be noted that some first energy supply devices 100 have two terminal assemblies capable of being charged, that is to say, some first energy supply devices 100 include a first terminal assembly 150 for slow charging and a second terminal assembly 160 for fast charging. For these first energy supply devices 100, the first charging apparatus 400 of the power tool system 10 may charge the first energy supply device 100 through the second terminal assembly 160, and the second charging apparatus 500 of the power tool system 10 may charge the first energy supply device 100 through the first terminal assembly 150.

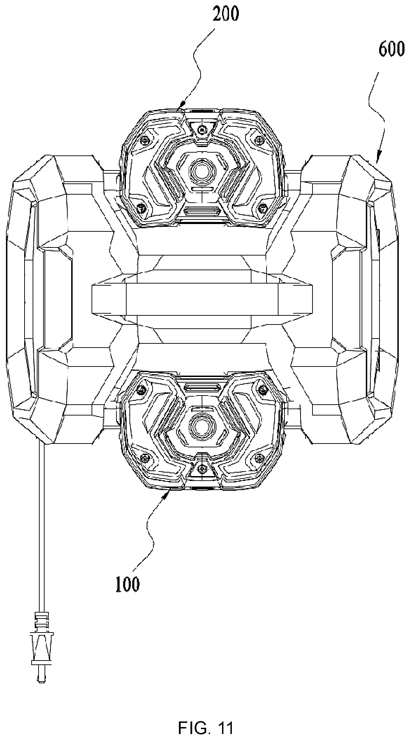

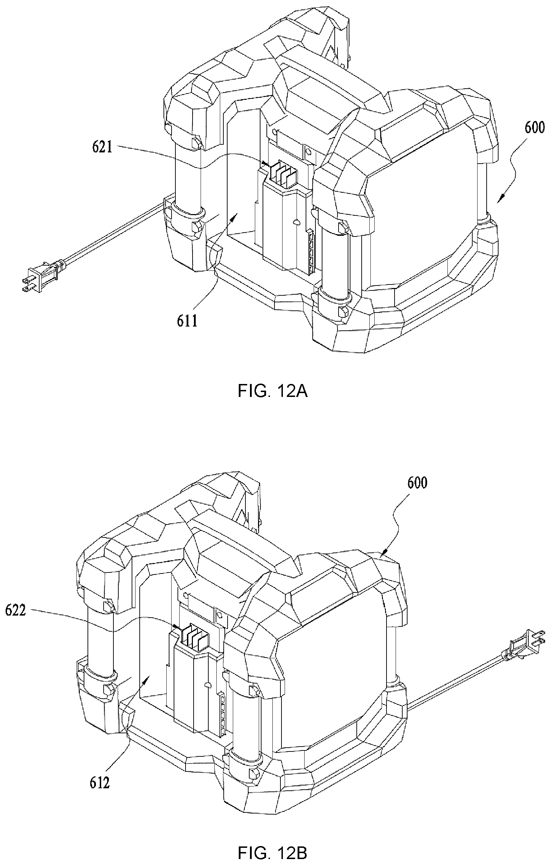

Optionally, the power tool system 10 further includes a third charging apparatus 600, and the third charging apparatus 600 is a universal charging apparatus capable of charging both the first energy supply device 100 and the second energy supply device 200. As shown in FIGS. 11 and 12, the third charging apparatus 600 has two support portions, which are a first support portion 611 capable of supporting the first energy supply device 100 and a second support portion 612 capable of supporting the second energy supply device 200, respectively. In an example, the two support portions may be arranged back to back. In other examples, the two support portions may be arranged in parallel or in other manners. A first terminal assembly 621 is disposed on the first support portion 610 and configured to be electrically connected to the charging terminal assembly 130 of the first energy supply device 100. A second terminal assembly 622 is disposed on the second support portion and configured to be electrically connected to the terminal assembly of the second energy supply device 200. In an example, the third charging apparatus 600 has two charging circuits (not shown): a first charging circuit configured to charge the first energy supply device 100; and a second charging circuit configured to charge the second energy supply device 200. Optionally, the first charging circuit is disposed on a first printed circuit board assembly (PCBA), and the second charging circuit is disposed on a second PCBA. The two PCBAs are encapsulated in a housing of the third charging apparatus 600, which is equivalent to two mutually independent chargers in the third charging apparatus 600, which do not interfere with each other. In another example, after AC-DC, two DC-DC circuits may be used for charging the first energy supply device 100 and the second energy supply device 200, respectively. When the first terminal assembly 621 is electrically connected to the charging terminal assembly 130 of the first energy supply device 100, the first charging circuit charges the first energy supply device 100; when the second terminal assembly 622 is electrically connected to the terminal assembly of the second energy supply device 200, the second charging circuit charges the second energy supply device 200. The first charging circuit and the second charging circuit are capable of simultaneously charging the first energy supply device 100 and the second energy supply device 200.

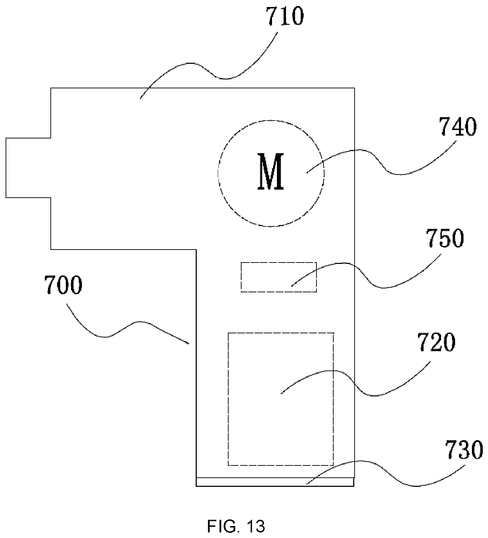

Optionally, the power tool system 10 may further include an integral power tool 700. As shown in FIG. 13, the integral power tool 700 includes a housing 710, a cell module 720, and a charging terminal assembly 730. Essentially, the integral power tool 700 is to remove the housing of the first energy supply device 100, dispose the cell module in the housing 710 of the integral power tool 700, and reserve only an interface of the charging terminal assembly 730 on the housing 710 of the integral power tool 700. Optionally, a positive terminal and a negative terminal in the charging terminal assembly 730 of the integral power tool 700 are exposed on a surface of the housing 710. Optionally, the charging terminal assembly 730 of the integral power tool 700 is located in hole slots of a mating portion connected to the charging apparatus. The integral power tool 700 may be connected to the first charging apparatus 400 or the third charging apparatus 600 and charged through the charging terminal assembly 730. The integral power tool 700 further includes an electric motor 740 configured to convert electrical energy into mechanical energy and output the mechanical energy to implement a specific function of the integral power tool 700 and a controller 750 configured to control operation of the electric motor 740 and manage the charge and discharge of the cell module 720. The cell module 120 of the integral power tool 700 adopts asymmetric capacitors or more specifically lithium-carbon capacitors as cells. Therefore, the integral power tool 700 has good performance such as a high cycle life, fast charging, low-temperature resistance, and a strong discharge ability, thereby improving the user experience. The integral power tool 700 may adopt the preceding charging control method and control method of the electric motor. The details are not repeated here.

The energy supply device of the present disclosure is charged fast, resists a low temperature, and can withstand large-current discharge. The power tool system can be adapted to both the preceding energy supply device and a conventional battery pack.

## Claims

1. An energy supply device (100) for supplying power to a power tool (300), comprising:
a housing (110) detachably connectable to the power tool in a mating manner and supported by the power tool, when connected thereto;
a plurality of cells (121) supported by the housing of the energy supply device;
a charging terminal assembly (130) configured to be electrically connected to a charging apparatus to charge the energy supply device; and
a discharge terminal assembly (140) configured to be electrically connected to the power tool to provide electrical energy for the power tool;
wherein the energy power supply device is capable of being charged with a charge rate greater than or equal to 6C;
**characterized in that**
the plurality of cells are each an asymmetric lithium-carbon supercapacitor
wherein the charging terminal assembly and the discharge terminal assembly are different from each other, and
wherein the energy supply device is configured to intermittently discharge at a large current through the discharge terminal assembly and continuously be charged at a large current through the charging terminal assembly.

2. The energy supply device according to claim 1, wherein each of the plurality of cells has a resistance greater than or equal to 0.3 mΩ and less than or equal to 3 mΩ.

3. The energy supply device according to claim 1, wherein a ratio of a charge current of the energy supply device to a weight of the energy supply device is greater than or equal to 15 A/kg and less than or equal to 200 A/kg.

4. The energy supply device according to claim 1, wherein a maximum discharge rate of the energy supply device is greater than or equal to 6C.

5. The energy supply device according to claim 1, being configured such that an allowable working temperature of the energy supply device is higher than or equal to minus 40 degrees Celsius and lower than or equal to 70 degrees Celsius.

6. The energy supply device according to claim 1, wherein the energy supply device is capable of being charged by the charging apparatus when the energy supply device is connected to the power tool in the mating manner.

7. The energy supply device according to claim 1, wherein a maximum discharge current of the energy supply device is about 400 A.

8. The energy supply device according to claim 1, wherein the power tool is an electric drill or a snow thrower.

## Patentansprüche

1. Energieversorgungsgerät (100) zur Stromversorgung eines Elektrowerkzeugs (300), umfassend:
ein Gehäuse (110), das in Passform lösbar mit dem Elektrowerkzeug verbindbar ist und im verbundenen Zustand vom Elektrowerkzeug getragen wird;
eine Mehrzahl von Zellen (121), die vom Gehäuse des Energieversorgungsgeräts getragen werden;
eine Ladeanschlussanordnung (130), die dazu eingerichtet ist, elektrisch mit einer Ladeeinrichtung verbunden zu werden, um das Energieversorgungsgerät zu laden; und
eine Entladeanschlussanordnung (140), die dazu eingerichtet ist, elektrisch mit dem Elektrowerkzeug verbunden zu werden, um dem Elektrowerkzeug elektrische Energie bereitzustellen;
wobei das Energieversorgungsgerät mit einer Laderate von größer oder gleich 6C ladbar ist,
**dadurch gekennzeichnet, dass**
die Mehrzahl von Zellen jeweils ein asymmetrischer Lithium-Kohlenstoff-Superkondensator ist,
wobei sich die Ladeanschlussanordnung und die Entladeanschlussanordnung voneinander unterscheiden, und
wobei das Energieversorgungsgerät so eingerichtet ist, über die Entladeanschlussanordnung intermittierend mit großem Strom zu entladen und über die Ladeanschlussanordnung kontinuierlich mit großem Strom geladen zu werden.

2. Energieversorgungsgerät nach Anspruch 1, wobei jede der Mehrzahl von Zellen einen Widerstand von größer oder gleich 0,3 mΩ und kleiner oder gleich 3 mΩ aufweist.

3. Energieversorgungsgerät nach Anspruch 1, wobei ein Verhältnis eines Ladestroms des Energieversorgungsgeräts zu einem Gewicht des Energieversorgungsgeräts größer oder gleich 15 A/kg und kleiner oder gleich 200 A/kg ist.

4. Energieversorgungsgerät nach Anspruch 1, wobei eine maximale Entladerate des Energieversorgungsgeräts größer oder gleich 6C ist.

5. Energieversorgungsgerät nach Anspruch 1, das so eingerichtet ist, dass eine zulässige Arbeitstemperatur des Energieversorgungsgeräts größer oder gleich minus 40 °C und kleiner oder gleich 70 °C ist.

6. Energieversorgungsgerät nach Anspruch 1, wobei das Energieversorgungsgerät durch die Ladeeinrichtung ladbar ist, wenn das Energieversorgungsgerät in Passform mit dem Elektrowerkzeug verbunden ist.

7. Energieversorgungsgerät nach Anspruch 1, wobei ein maximaler Entladestrom des Energieversorgungsgeräts etwa 400 A beträgt.

8. Energieversorgungsgerät nach Anspruch 1, wobei das Elektrowerkzeug ein Elektroschrauber oder eine Schneefräse ist.

## Revendications

1. Dispositif d'alimentation en énergie (100) destiné à alimenter un outil électrique (300), comprenant :
un boîtier (110) apte à être relié de manière amovible à l'outil électrique par ajustement et, lorsqu'il y est relié, supporté par l'outil électrique ;
une pluralité de cellules (121) supportées par le boîtier du dispositif d'alimentation en énergie ;
un ensemble de contacts de charge (130) conçu pour être relié électriquement à un appareil de charge afin de charger le dispositif d'alimentation en énergie ; et
un ensemble de contacts de décharge (140) conçu pour être relié électriquement à l'outil électrique afin de lui fournir une énergie électrique ;
dans lequel le dispositif d'alimentation en énergie est apte à être chargé avec un taux de charge supérieur ou égal à 6C,
**caractérisé en ce que**
la pluralité de cellules est, chacune, un supercondensateur lithium-carbone asymétrique,
dans lequel l'ensemble de contacts de charge et l'ensemble de contacts de décharge sont distincts l'un de l'autre, et
dans lequel le dispositif d'alimentation en énergie est conçu pour décharger par intermittence à fort courant via l'ensemble de contacts de décharge et être chargé en continu à fort courant via l'ensemble de contacts de charge.

2. Dispositif d'alimentation en énergie selon la revendication 1, dans lequel chacune de la pluralité de cellules présente une résistance supérieure ou égale à 0,3 mΩ et inférieure ou égale à 3 mΩ.

3. Dispositif d'alimentation en énergie selon la revendication 1, dans lequel un rapport du courant de charge du dispositif d'alimentation en énergie à son poids est supérieur ou égal à 15 A/kg et inférieur ou égal à 200 A/kg.

4. Dispositif d'alimentation en énergie selon la revendication 1, dans lequel un taux maximal de décharge du dispositif d'alimentation en énergie est supérieur ou égal à 6C.

5. Dispositif d'alimentation en énergie selon la revendication 1, étant conçu de sorte qu'une température de fonctionnement admissible du dispositif d'alimentation en énergie soit supérieure ou égale à moins 40 °C et inférieure ou égale à 70 °C.

6. Dispositif d'alimentation en énergie selon la revendication 1, dans lequel le dispositif d'alimentation en énergie est apte à être chargé par l'appareil de charge lorsque le dispositif d'alimentation en énergie est raccordé par ajustement à l'outil électrique.

7. Dispositif d'alimentation en énergie selon la revendication 1, dans lequel un courant maximal de décharge du dispositif d'alimentation en énergie est d'environ 400 A.

8. Dispositif d'alimentation en énergie selon la revendication 1, dans lequel l'outil électrique est une perceuse électrique ou une souffleuse à neige.
